# EUROPEAN PATENT APPLICATION

(11) **EP 4 852 175 A1**
(43) Date of publication of application: **09.12.2026**
(21) Application number: 25916285.7
(22) Date of filing: 24.12.2025
(51) Int. Cl.: H01M 50/244, H01M 50/262, H01M 50/289, H01M 50/204

(54) **BATTERY PACK**

(30) Priority: 03.01.2025 KR 20250000834
(71) Applicant: LG Energy Solution, Ltd., Seoul 07335 (KR)
(72) Inventor: HAN, Nyeon Gu, Daejeon 34122 (KR); SHIN, Ju Hwan, Daejeon 34122 (KR)
(74) Representative: Plasseraud IP
(86) International application number: PCT/KR2025/022690
(87) International publication number: WO 2026/147068

(57) **Abstract**

According to exemplary embodiments, a battery pack is provided. The battery pack may include: a pack housing including a base plate, a cross beam extending on the base plate, and a side wall on an edge of the base plate; a battery cell assembly including battery cells arranged in a first direction on the base plate, and first and second side beams spaced apart from each other in the first direction with the battery cells interposed therebetween; and a lift band between the battery cell assembly and the pack housing. The lift band may include: a first portion between the base plate and the battery cells; a second portion connected to the first portion and overlapping the first side beam in the first direction; and a third portion connected to the second portion and overlapping the first side beam in a vertical direction perpendicular to a mounting surface of the base plate.

## Description

### [Technical Field]

The present disclosure relates to a battery pack. This application claims the benefit of Korean Patent Application No. 10-2025-0000834, filed on January 3, 2025, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has been drastically reduced, and the driving range of battery electric vehicles (BEVs) has increased to a level comparable to that of internal combustion engine vehicles. As a result, the principal application of secondary batteries is shifting from mobile devices to mobility applications.

The key trends in the technological development of secondary batteries for mobility are improvements in energy density and safety. Here, the energy density of a secondary battery refers to the maximum electrical energy that the secondary battery can store, divided by the mass of the secondary battery. Since the high energy density of a secondary battery is directly linked to the driving efficiency and driving range of mobility, various research efforts are being carried out to improve the energy density of secondary batteries.

### [Summary]

### [Technical Problem]

The technical problem to be solved by the technical idea of the present disclosure is to provide a battery pack with improved manufacturing process efficiency and facilitated after-sales service.

### [Technical Solution]

According to exemplary embodiments for solving the above-described problem, a battery pack is provided. The battery pack may include: a pack housing including a base plate, a cross beam extending on the base plate, and a side wall on an edge of the base plate; a battery cell assembly including battery cells arranged in a first direction on the base plate, and first and second side beams spaced apart from each other in the first direction with the battery cells interposed therebetween; and a lift band between the battery cell assembly and the pack housing. The lift band may include: a first portion between the base plate and the battery cells; a second portion connected to the first portion and overlapping the first side beam in the first direction; and a third portion connected to the second portion and overlapping the first side beam in a vertical direction perpendicular to a mounting surface of the base plate.

The battery pack may further include: a fourth portion connected to the first portion and overlapping the second side beam in the first direction; and a fifth portion connected to the fourth portion and overlapping the second side beam in the vertical direction.

The lift band may include a first guide pin on the third portion.

The first guide pin may face the cross beam.

The cross beam may include a guide hole corresponding to the first guide pin.

The first guide pin may face the first side beam.

The first side beam may include a guide hole corresponding to the first guide pin.

The lift band may further include a second guide pin on the third portion. The first guide pin may face the cross beam. The second guide pin may face the first side beam.

The cross beam may include a guide hole corresponding to the first guide pin. The first side beam may include a guide hole corresponding to the second guide pin.

The third portion may include a bolting hole. The first side beam may include a bolting hole.

The battery pack may further include a fastener passing through the bolting hole of the third portion and the bolting hole of the first side beam.

The lift band may include a third guide pin on a fifth portion.

The third guide pin may face the side wall. The side wall may include a guide hole corresponding to the third guide pin.

The third guide pin may face the second side beam. The second side beam may include a guide hole corresponding to the third guide pin.

The lift band may further include a fourth guide pin on the fifth portion. The third guide pin may face the side wall. The fourth guide pin may face the second side beam. The side wall may include a guide hole corresponding to the third guide pin. The second side beam may include a guide hole corresponding to the fourth guide pin.

### [Advantageous Effects]

The battery pack according to exemplary embodiments of the present disclosure includes a lifting band between the pack housing and the battery cell assembly. Accordingly, when a quality issue occurs in the battery cell assembly, the battery cell assembly can be easily separated and replaced.

The lifting band according to exemplary embodiments of the present disclosure includes guide pins that can be coupled to the pack housing or the battery cell assembly. Accordingly, the fastening of the lifting band during the manufacture of the battery pack becomes easier, thereby improving the efficiency of the battery pack manufacturing process.

The effects that can be obtained from the exemplary embodiments of the present disclosure are not limited to the effects mentioned above, and other effects that are not mentioned can be clearly derived and understood from the following description by those of ordinary skill in the technical field to which the exemplary embodiments of the present disclosure pertain. That is, unintended effects resulting from practicing the exemplary embodiments of the present disclosure may also be derived from the exemplary embodiments of the present disclosure by those of ordinary skill in the art.

### [Brief Description of the Drawings]

FIG. 1 is a top view of a battery pack according to exemplary embodiments.
FIG. 2 is a cross-sectional view of a battery pack according to exemplary embodiments.
FIG. 3 is a cross-sectional view of a battery pack according to exemplary embodiments.
FIG. 4 is a perspective view of a lifting band according to exemplary embodiments.
FIG. 5 is a cross-sectional view of a battery pack according to exemplary embodiments.
FIG. 6 is a cross-sectional view of a battery pack according to exemplary embodiments.
FIG. 7 is a perspective view of a lifting band according to exemplary embodiments.
FIG. 8 is a cross-sectional view of a battery pack according to exemplary embodiments.
FIG. 9 is a perspective view of a lifting band according to exemplary embodiments.

### [Best Mode for Carrying Out the Invention]

Hereinafter, preferred embodiments of the present disclosure will be described in detail with reference to the accompanying drawings. Prior to the description, it should be noted that the terms or words used in the present specification and claims shall not be construed as being limited to ordinary or dictionary meanings, and shall be interpreted with meanings and concepts consistent with the technical idea of the present disclosure, based on the principle that the inventor may appropriately define the concept of the terms in order to describe his/her own invention in the best manner.

Therefore, the embodiments described in the present specification and the configurations illustrated in the drawings are merely the most preferred embodiment of the present disclosure, and do not represent all of the technical idea of the present disclosure. It should be understood that various equivalents and modifications that can replace them may exist at the time of filing this application.

In addition, in describing the present disclosure, if it is determined that a detailed description of a known configuration or function related thereto may obscure the gist of the present disclosure, the detailed description thereof will be omitted.

Embodiments of the present disclosure are provided to more fully describe the present disclosure to those of ordinary skill in the art, and thus the shapes and sizes of the components in the drawings may be exaggerated, omitted, or schematically illustrated for clearer description. Accordingly, the size or proportion of each component does not entirely reflect the actual size or proportion.

### (First Embodiment)

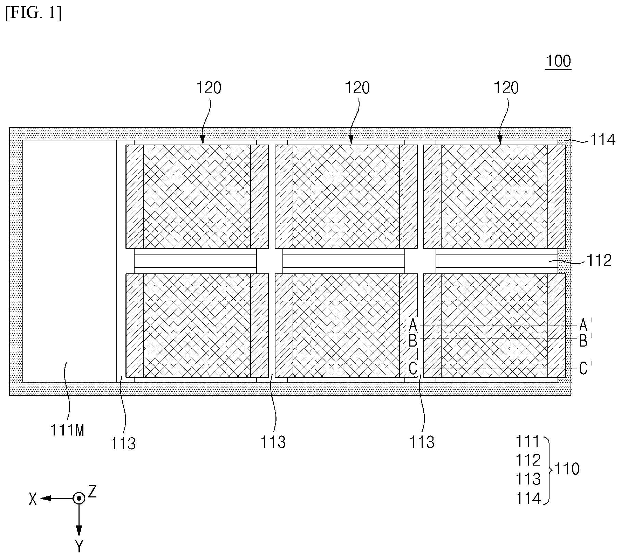

FIG. 1 is a top view of a battery pack 100 according to exemplary embodiments.

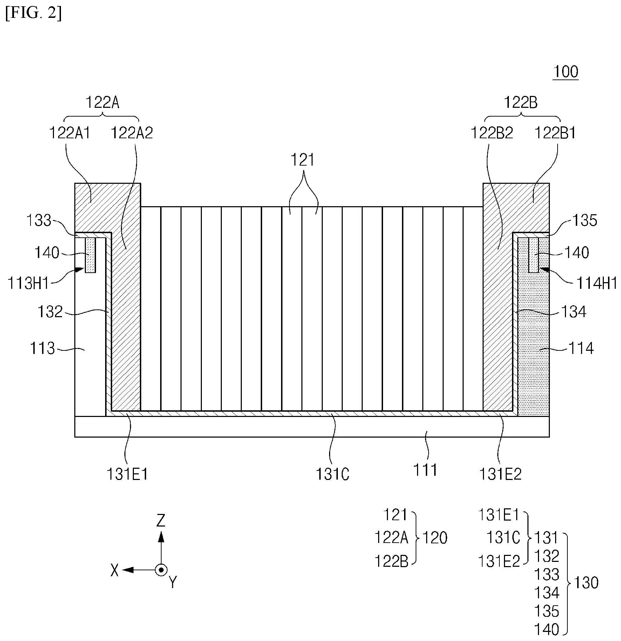

FIG. 2 is a cross-sectional view of the battery pack 100 according to exemplary embodiments. FIG. 2 illustrates a cross-section taken along line A-A' of FIG. 1.

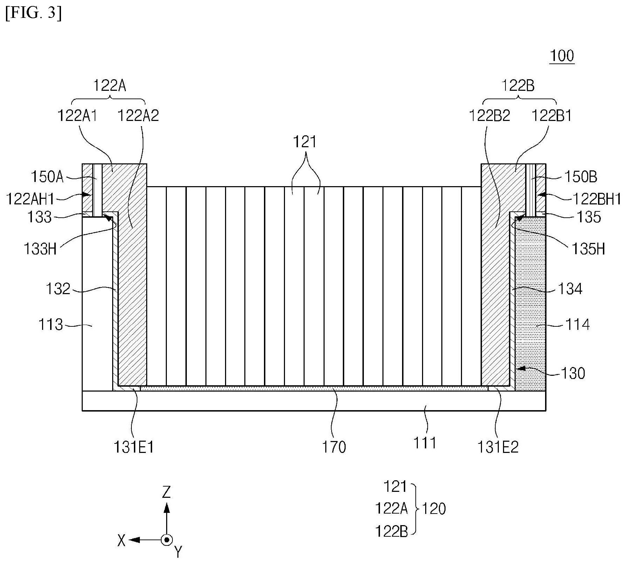

FIG. 3 is a cross-sectional view of the battery pack 100 according to exemplary embodiments. FIG. 3 illustrates a cross-section taken along line B-B' of FIG. 1.

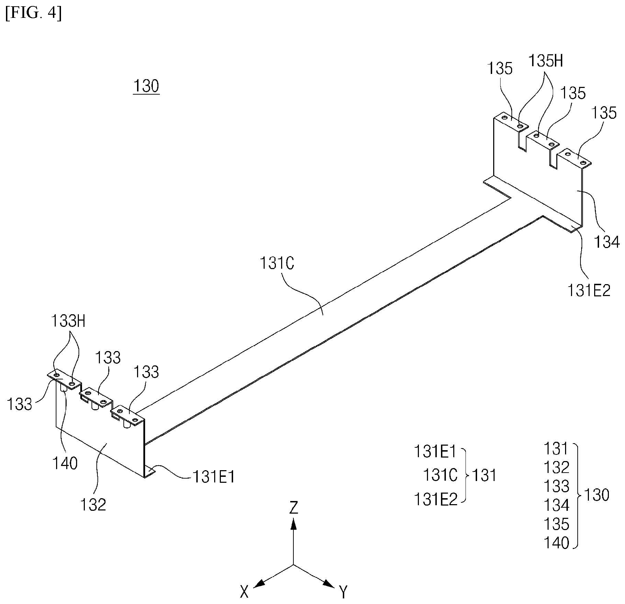

FIG. 4 is a perspective view of a lifting band 130 according to exemplary embodiments.

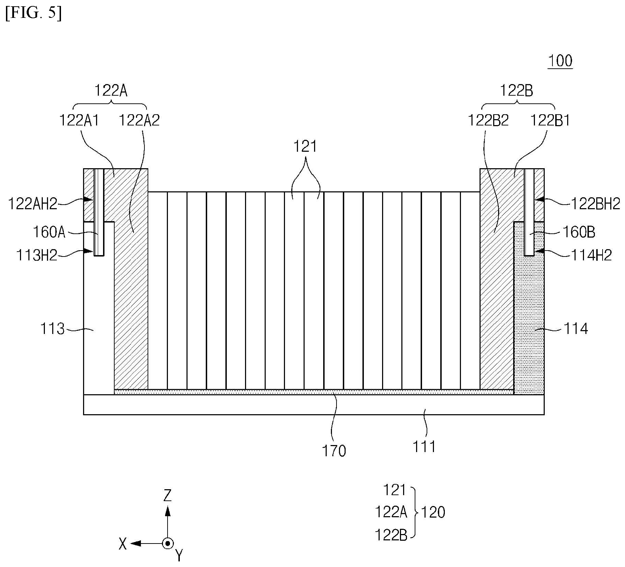

FIG. 5 is a cross-sectional view of the battery pack 100 according to exemplary embodiments. FIG. 5 illustrates a cross-section taken along line C-C' of FIG. 1.

Referring to FIGS. 1 to 5, the battery pack 100 may include a pack housing 110, a plurality of battery cell assemblies 120, a lifting band 130, and Thermal Interface Material (TIM) layers 170.

The pack housing 110 may include a base plate 111, a center beam 112, cross beams 113, and a side wall 114. Here, two directions substantially parallel to the mounting surface 111M of the base plate 111 are defined as the X direction and the Y direction, and a direction substantially perpendicular to the mounting surface 111M of the base plate 111 is defined as the Z direction. The X direction, the Y direction, and the Z direction may be substantially perpendicular to each other.

The base plate 111 may support the plurality of battery cell assemblies 120. The base plate 111 may have a flat plate shape.

The center beam 112 and the cross beams 113 may partition the space in which the battery cell assemblies 120 are mounted. The center beam 112 and the cross beams 113 may be surrounded by the side wall 114. The center beam 112 and the cross beams 113 may divide the space defined by the pack housing 110.

The center beam 112 may extend in the X direction. The center beam 112 may be formed together with the base plate 111 by an extrusion process, or may be welded to the base plate 111. The center beam 112 may isolate the battery cell assemblies 120 from each other in the Y direction.

Each of the cross beams 113 may intersect with the center beam 112. Each of the cross beams 113 may extend in the Y direction. The cross beams 113 may isolate the plurality of battery cell assemblies 120 from each other in the X direction.

Each of the cross beams 113 may include guide holes 113H1 (see FIG. 2) and bolting holes 113H2 (see FIG. 5). The guide holes 113H1 may be configured for alignment with the lifting band 130. Each of the guide holes 113H1 may accommodate each of the guide pins 140 of the lifting band 130. The bolting holes 113H2 may be configured for coupling with the side beam 122A. The side beam 122A may be coupled to the cross beam 113 by fasteners 160A that pass through the bolting holes 113H2 of the cross beam 113 and the bolting holes 122AH2 of the side beam 122A.

The side wall 114 may be substantially perpendicular to the base plate 111. The side wall 114 may be adjacent to the edge portions of the base plate 111. The side wall 114 may be coupled to the edge portions of the base plate 111. The side wall 114 may horizontally surround the plurality of battery cell assemblies 120.

The side wall 114 may include guide holes 114H1 (see FIG. 2) and bolting holes 114H2 (see FIG. 5). The guide holes 114H1 may be configured for alignment with the lifting band 130. Each of the guide holes 114H1 may accommodate each of the guide pins 140 of the lifting band 130. The bolting holes 114H2 may be configured for coupling with the side beam 122B. The side beam 122B may be coupled to the side wall 114 by fasteners 160B that pass through the bolting holes 114H2 of the side wall 114 and the bolting holes 122BH2 of the side beam 122B.

The plurality of battery cell assemblies 120 may be disposed on the mounting surface 111M of the base plate 111 of the pack housing 110. The battery cell assemblies 120 may be arranged in the X direction and the Y direction. In this example, three battery cell assemblies 120 are arranged in the X direction and two battery cell assemblies are arranged in the Y direction, so that the plurality of battery cell assemblies 120 form a matrix of 2 rows and 3 columns; however, this is for illustration purposes and does not limit the technical idea of the present disclosure in any sense.

Hereinafter, the technical idea of the present disclosure will be described with reference to an embodiment in which each of the plurality of battery cell assemblies 120 does not include a module frame (i.e., an embodiment in which the battery pack 100 is of a module-less type, also referred to as a Cell-to-Pack (CTP) type). However, this is a non-limiting example and does not limit the technical idea of the present disclosure in any sense. Those of ordinary skill in the art can easily arrive at a plurality of battery cell assemblies including module frames and a module-type battery pack including the same, based on the description herein.

Each of the plurality of battery cell assemblies 120 may include a plurality of battery cells 121 and side beams 122A, 122B.

Each of the plurality of battery cells 121 may include an electrode assembly, an electrolyte, and a case. Each of the plurality of battery cells 121 may be any one of a cylindrical battery cell, a prismatic battery cell, and a pouch-type battery cell. The electrode assembly of the cylindrical battery cell is accommodated in a cylindrical metal can. The electrode assembly of the prismatic battery cell is accommodated in a prismatic metal can. The electrode assembly of the pouch-type battery cell is accommodated in a pouch case including an aluminum laminate sheet.

The electrode assembly includes a positive electrode, a negative electrode, and a separator interposed between the positive electrode and the negative electrode. A jelly-roll type electrode assembly is formed by winding a positive electrode, a negative electrode, and a separator interposed therebetween. A stack-type electrode assembly includes a plurality of positive electrodes, a plurality of negative electrodes, and a plurality of separators interposed therebetween, which are sequentially stacked.

According to exemplary embodiments, the plurality of battery cells 121 may constitute a plurality of banks. The plurality of banks may include one or more battery cells 121 connected in parallel. The plurality of banks may be connected to each other in series. The number of battery cells 121 included in each of the plurality of banks and the number of banks connected to each other in series may be determined according to the voltage and current to be output through each of the plurality of battery cell assemblies 120.

According to exemplary embodiments, each of the battery cell assemblies 120 may further include a plurality of spacers. The plurality of spacers may be interposed between the plurality of battery cells 121. The plurality of spacers may include an elastic material and may absorb swelling of the plurality of battery cells. According to exemplary embodiments, the plurality of spacers may be thermal barriers. According to exemplary embodiments, each of the plurality of spacers may have a high melting temperature and a low thermal conductivity. According to exemplary embodiments, each of the plurality of spacers may include a flame-retardant material such as ceramic and coated glass material. According to exemplary embodiments, the plurality of spacers may be configured to release a fire retarding material and a fire extinguishing agent when a thermal runaway event occurs.

The side beams 122A, 122B may be spaced apart from each other in the X direction with the plurality of battery cells 121 interposed therebetween. The side beams 122A, 122B may support the battery cells 121 in the X direction. The side beams 122A, 122B may have substantially the same shape. The side beams 122A, 122B may include aluminum. The side beams 122A, 122B may be provided by an extrusion process. The side beams 122A, 122B may be arranged symmetrically with respect to the plurality of battery cells 121. The side beam 122A may include a coupling part 122A1 and a plate part 122A2. The side beam 122B may include a coupling part 122B1 and a plate part 122B2. Each of the side beams 122A and 122B may have a shape approximately resembling the Greek letter 'Γ'.

The plate part 122A2 of the side beam 122A may have a flat plate shape substantially perpendicular to the X direction. The coupling part 122A1 of the side beam 122A may include a plurality of bolting holes 122AH1 (see FIG. 3) and a plurality of bolting holes 122AH2 (see FIG. 5).

Referring to FIG. 3, the coupling part 122A1 of the side beam 122A may include a plurality of bolting holes 122AH1. A fastener 150A may be coupled to the bolting hole 122AH1 of the coupling part 122A1 of the side beam 122A. The fastener 150A may pass through the bolting hole 122AH1 of the coupling part 122A1 and the bolting hole 133H of the lifting band 130. The fastener 150A may fix the lifting band 130 to the side beam 122A.

Referring to FIG. 5, the coupling part 122A1 of the side beam 122A may include the bolting holes 122AH2. A fastener 160A may be coupled to the bolting hole 122AH2 of the coupling part 122A1 of the side beam 122A. The fastener 160A may pass through the bolting hole 122AH2 of the coupling part 122A1 and the bolting hole 113H2 of the cross beam 113. The fastener 160A may fix the side beam 122A to the cross beam 113.

The plate part 122B2 of the side beam 122B may have a flat plate shape substantially perpendicular to the X direction. The coupling part 122B1 of the side beam 122B may include a plurality of bolting holes 122BH1 (see FIG. 3) and a plurality of bolting holes 122BH2 (see FIG. 5).

Referring to FIG. 3, a fastener 150B may be coupled to the bolting hole 122BH1 of the coupling part 122B1 of the side beam 122B. The fastener 150B may pass through the bolting hole 122BH1 of the coupling part 122B1 and the bolting hole 135H of the lifting band 130. The fastener 150B may fix the lifting band 130 to the side beam 122B.

Referring to FIG. 5, a fastener 160B may be coupled to the bolting hole 122BH2 of the coupling part 122B1 of the side beam 122B. The fastener 160B may pass through the bolting hole 122BH2 of the coupling part 122B1 and the bolting hole 114H2 of the side wall 114. The fastener 160B may fix the side beam 122B to the side wall 114.

According to exemplary embodiments, the side beam 122A may include a groove into which the second portion 132 and the third portion 133 of the lifting band 130 are inserted. According to exemplary embodiments, the side beam 122B may include a groove into which the fourth portion 134 and the fifth portion 135 of the lifting band 130 are inserted.

The lifting band 130 may be coupled to each of the side beams 122A, 122B. The lifting band 130 may include a metal material. The lifting band 130 may include a first portion 131, a second portion 132, a third portion 133, a fourth portion 134, a fifth portion 135, and guide pins 140.

The first portion 131 may extend in the X direction. The first portion 131 may overlap the plurality of battery cells 121 in the Z direction. The first portion 131 may be in contact with the plurality of battery cells 121. The first portion 131 may support the plurality of battery cells 121. Accordingly, the lifting band 130 may prevent or mitigate sagging of the plurality of battery cells 121 when the battery cell assemblies 120 are placed on the pack housing 110 or when the battery cell assemblies 120 are lifted from the pack housing 110. Accordingly, not only can the assembly efficiency be improved during the manufacture of the battery pack 100, but after-sales service can also be facilitated.

The first portion 131 may include end parts 131E1, 131E2 and a central part 131C. The central part 131C may be located between the end parts 131E1, 131E2. The width of the central part 131C in the Y direction may be smaller than the width of the end part 131E1 in the Y direction. The width of the central part 131C in the Y direction may be smaller than the width of the end part 131E2 in the Y direction. The width of the central part 131C in the X direction may be larger than the width of the end part 131E1 in the X direction. The width of the central part 131C in the X direction may be larger than the width of the end part 131E1 in the X direction. According to exemplary embodiments, the first portion 131 may have an H-shape. The shape of the first portion 131 may be changed depending on the size of the battery cell assemblies 120 and the number of battery cells 121.

The second portion 132 and the fourth portion 134 may each be connected to the first portion 131. The second portion 132 and the fourth portion 134 may be spaced apart from each other in the X direction with the first portion 131 interposed therebetween. The second portion 132 and the fourth portion 134 may extend in the Z direction. The lifting band 130 may include a bent portion between the second portion 132 and the first portion 131 and a bent portion between the fourth portion 134 and the first portion 131. The second portion 132 may overlap the plate part 122A2 of the first side beam 122A in the X direction. The second portion 132 may overlap the cross beam 113 in the X direction. The second portion 132 may cover the cross beam 113. The fourth portion 134 may overlap the plate part 122B2 of the second side beam 122B in the X direction. The fourth portion 134 may overlap the side wall 114 in the X direction. The fourth portion 134 may cover the side wall 114.

The third portion 133 may be connected to the second portion 132. Referring to FIG. 4, the third portion 133 may include a plurality of segments. The plurality of segments may be spaced apart from each other in the Y direction. Each of the segments may extend in the X direction. The lifting band 130 may include a bent portion between each of the segments of the third portion 133 and the second portion 132. The segments of the third portion 133 may be spaced apart from the first portion 131 in the Z direction with the second portion 132 interposed therebetween. The third portion 133 is composed of segments, thereby reducing the weight of the lifting band 130.

Each of the segments of the third portion 133 may include bolting holes 133H for coupling with the fasteners 150A. Each of the fasteners 150A may pass through the bolting hole 122AH1 of the side beam 122A and the bolting hole 133H of the third portion 133. The fasteners 150A may fix the lifting band 130 to the side beam 122A.

Each of the segments of the third portion 133 may include a guide pin 140. The guide pin 140 may be located between adjacent bolting holes 133H. The guide pin 140 may face the cross beam 113. The guide pin 140 may be accommodated in the guide hole 113H1 of the cross beam 113. The guide hole 113H1 may be formed at a position corresponding to the guide pin 140. The guide hole 113H1 may have a shape complementary to the guide pin 140.

However, the shape of the third portion 133 is not limited to the above. According to other exemplary embodiments, the third portion 133 may be formed as a single plate rather than a plurality of segments.

The fifth portion 135 may be connected to the fourth portion 134. Referring to FIG. 4, the fifth portion 135 may include a plurality of segments. The plurality of segments may be spaced apart from each other in the Y direction. Each of the segments may extend in the X direction. The lifting band 130 may include a bent portion between each of the segments of the fifth portion 135 and the fourth portion 134. The segments of the fifth portion 135 may be spaced apart from the first portion 131 in the Z direction with the fourth portion 134 interposed therebetween. The fifth portion 135 is composed of segments, thereby reducing the weight of the lifting band 130.

Each of the segments of the fifth portion 135 may include bolting holes 135H for coupling with the fasteners 150B. Each of the fasteners 150B may pass through the bolting hole 122BH1 of the side beam 122B and the bolting hole 135H of the fifth portion 135. The fasteners 150B may fix the lifting band 130 to the side beam 122B.

Each of the segments of the fifth portion 135 may include a guide pin 140. The guide pin 140 may be located between adjacent bolting holes 135H. The guide pin 140 may face the side wall 114. The guide pin 140 may be accommodated in the guide hole 114H1 of the side wall 114. The guide hole 114H1 may be formed at a position corresponding to the guide pin 140. The guide hole 114H1 may have a shape complementary to the guide pin 140.

However, the shape of the fifth portion 135 is not limited to the above. According to other exemplary embodiments, the fifth portion 135 may be formed as a single plate rather than a plurality of segments.

The battery pack 100 according to the exemplary embodiments of the present disclosure includes the lifting band 130 including the guide pins 140 and the pack housing 110 including the guide holes 113H1, 114H1, so that the lifting band 130 can be easily and precisely seated at the correct position of the pack housing 110. Accordingly, the efficiency and accuracy of the assembly process of the battery pack 100 can be improved.

Although FIGS. 1 to 5 illustrate the battery cell assembly 120 between the cross beam 113 and the side wall 114 as an example, the above description may be equally or similarly applied to the battery cell assemblies 120 between neighboring cross beams 113. That is, the lifting band 130 coupled to the side beams 122A, 122B of the battery cell assembly 120 may be guided with respect to two adjacent cross beams 113.

The TIM layers 170 may be provided on the base plate 111 of the pack housing 110. The TIM layers 170 may be interposed between each of the plurality of battery cell assemblies 120 and the base plate 111. The TIM layers 170 may include a resin composition. The TIM layers 170 may be provided by an application process of a thermally conductive resin.

According to exemplary embodiments, the TIM layers 170 may not be interposed between the first portion 131 of the lifting band 130 and the base plate 111. According to exemplary embodiments, two TIM layers 170 spaced apart from each other in the Y direction with the first portion 131 of the lifting band 130 interposed therebetween may be interposed between each of the battery cell assemblies 120 and the base plate 111. That is, the first portion 131 of the lifting band 130 may be interposed between the TIM layers 170 in the Y direction. The first portion 131 of the lifting band 130 of each of the plurality of battery cell assemblies 120 may be at the same level as the TIM layers 170 with respect to the mounting surface 111M of the base plate 111. However, this is only an example and does not limit the technical idea of the present disclosure in any sense.

The resin composition may be a room-temperature curable composition. That is, the curing reaction of the resin composition may be initiated and proceeded at room temperature. The curing reaction of the resin composition may be accelerated at a temperature higher than room temperature. The curing reaction rate of the resin composition at a temperature higher than room temperature may be faster than the curing reaction rate of the resin composition at room temperature. As a non-limiting example, the base resin of the resin composition may be any one of a silicone resin, a polyol resin, an epoxy resin, and an acrylic resin.

The curing agent of the resin composition may be selected depending on the base resin of the resin composition. For example, when the base resin of the resin composition is a silicone resin, the curing agent may be a siloxane compound; when the base resin of the resin composition is a polyol resin, an isocyanate compound may be used as the curing agent; when the base resin of the resin composition is an epoxy resin, the curing agent may be an amine compound; and when the base resin of the resin composition is an acrylic resin, the curing agent may be an isocyanate compound.

The inorganic filler of the resin composition may have a relatively high thermal conductivity. According to exemplary embodiments, the thermal conductivity of the inorganic filler of the resin composition may be about 1 W/mK or more. According to exemplary embodiments, the thermal conductivity of the inorganic filler of the resin composition may be 5 W/mK or more. According to exemplary embodiments, the thermal conductivity of the inorganic filler of the resin composition may be 10 W/mK or more. According to exemplary embodiments, the thermal conductivity of the inorganic filler of the resin composition may be about 15 W/mK or more.

According to exemplary embodiments, the inorganic filler of the resin composition may include a ceramic. For example, the inorganic filler of the resin composition may include any one of aluminum oxide (Al₂O₃), aluminum nitride (AlN), boron nitride (BN), silicon nitride (Si₃N₄), silicon carbide (SiC), beryllium oxide (BeO), zinc oxide (ZnO), aluminum hydroxide (Al(OH)₃), and boehmite. The resin composition may also include a carbon filler. The resin composition may also include, for example, any one of fumed silica, clay, and calcium carbonate.

Although not illustrated in the drawings, the battery pack 100 may include venting devices. The venting devices may be coupled to one of the side walls 114. The side wall 114 coupled to the venting devices may include a venting path connected to the venting devices. The venting devices may be configured to delay thermal propagation by discharging high-temperature gas inside the battery pack 100 to the outside when at least one of the plurality of battery cell assemblies 120 is in a thermal runaway state.

Here, thermal runaway of the plurality of battery cell assemblies 120 is a state in which a temperature change of the plurality of battery cell assemblies 120 further accelerates the temperature change, which is uncontrollable positive feedback. The plurality of battery cell assemblies 120 in a thermal runaway state exhibit a rapid temperature rise and discharge a large amount of high-pressure gas and combustion debris.

The battery pack 100 may include a lid coupled to the side wall 114. The lid may cover elements disposed inside the battery pack 100 such as the battery cell assemblies 120 and electrical components. The lid may be fixed to the battery pack 100 by mechanical coupling means such as bolts.

The battery pack 100 may further include inter-busbars. The plurality of battery cell assemblies 120 may be connected in series by the inter-busbars, and the battery pack 100 may output a high voltage.

The battery pack 100 may further include electrical components. The electrical components may be disposed within the pack housing 110. The electrical components may be disposed between one of the side walls 114 on which the venting devices are installed and the plurality of battery cell assemblies 120.

The electrical components may include, for example, a Battery Management System (BMS). The BMS may be configured to perform monitoring, balancing, and control of the battery pack. The monitoring of the battery pack 100 may include measurement of the voltage and current of specific nodes inside the plurality of battery cell assemblies 120 and measurement of the temperature at set positions inside the battery pack 100. The battery pack 100 may include sensors for measuring the above-described voltage, current, and temperature.

The balancing of the battery pack 100 is an operation to reduce deviations between the plurality of battery cell assemblies 120. The control of the battery pack 100 includes preventing the occurrence of overcharging, over-discharging, and overcurrent. Through monitoring, balancing, and control, the battery pack 100 can operate under optimal conditions, thereby preventing a shortened lifespan of each of the plurality of battery cell assemblies 120.

The electrical components may further include a cooling device, a Power Relay Assembly (PRA), a safety plug, and the like. The cooling device may include a cooling fan. The cooling fan may prevent overheating of each of the plurality of battery cell assemblies 120 by circulating air inside the battery pack 100. The PRA may be configured to supply or cut off the power of the high-voltage battery to an external load (e.g., a vehicle motor). The PRA may protect the plurality of battery cell assemblies 120 and the external load (e.g., the vehicle motor) by cutting off the power supply to the external load (e.g., the vehicle motor) in a situation where an abnormal voltage such as a voltage surge occurs.

### (Second Embodiment)

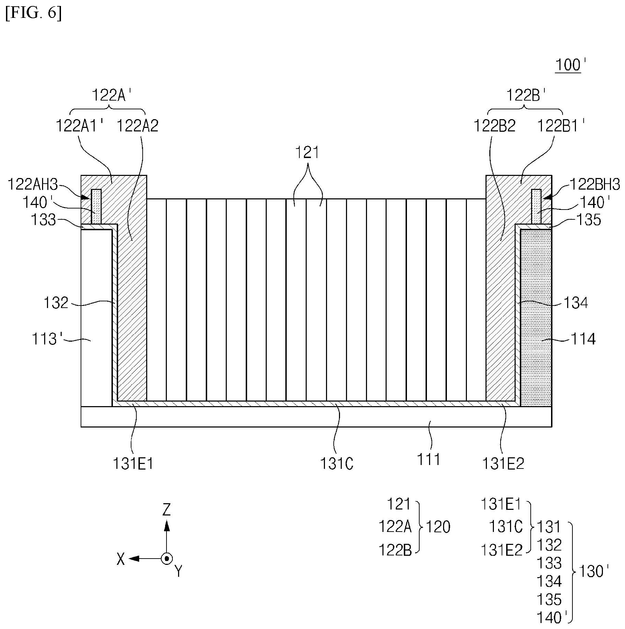

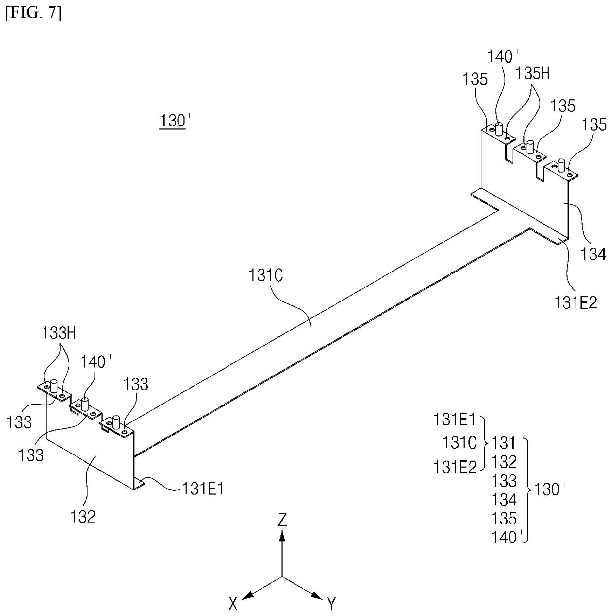

FIGS. 6 and 7 are diagrams for explaining a battery pack 100' according to other exemplary embodiments.

FIG. 6 is a cross-sectional view illustrating a battery pack 100' according to exemplary embodiments. FIG. 6 illustrates a cross-section taken along line A-A' of FIG. 1.

FIG. 7 is a perspective view illustrating a lifting band 130' according to exemplary embodiments.

In FIGS. 6 and 7, components having the same reference numerals as in FIGS. 1 to 5 may have the descriptions described above in the first embodiment applied thereto, and the same descriptions will be omitted. Hereinafter, the description will focus on the configurations of the second embodiment that are different from the first embodiment.

The battery pack 100' differs from the battery pack 100 of FIGS. 1 to 5 in the positions of the guide pins 140' of the lifting band 130' and the shapes of the side beams 122A', 122B'.

The lifting band 130' may include guide pins 140' on the third portion 133 and guide pins 140' on the fifth portion 135. The guide pins 140' on the third portion 133 may face the side beam 122A'. The guide pins 140' on the third portion 133 may face the coupling part 122A1' of the side beam 122A'. The guide pins 140' on the fifth portion 135 may face the side beam 122B'. The guide pins 140' on the fifth portion 135 may face the coupling part 122B1' of the side beam 122B'. The cross beam 113' may not include bolting holes (113H1 in FIG. 2).

The coupling part 122A1' of the side beam 122A' may include guide holes 122AH3. Each of the guide holes 122AH3 may accommodate each of the guide pins 140' on the third portion 133. Each of the guide holes 122AH3 may be formed at a position corresponding to each of the guide pins 140' on the third portion 133. Each of the guide holes 122AH3 may have a shape complementary to each of the guide pins 140' of the third portion 133.

The coupling part 122B1' of the side beam 122B' may include guide holes 122BH3. Each of the guide holes 122BH3 may accommodate each of the guide pins 140' on the fifth portion 135. Each of the guide holes 122BH3 may be formed at a position corresponding to each of the guide pins 140' on the fifth portion 135. Each of the guide holes 122BH3 may have a shape complementary to each of the guide pins 140' of the fifth portion 135.

The battery pack 100' according to the exemplary embodiments of the present disclosure includes the lifting band 130' including the guide pins 140' and the side beams 122A', 122B' including the guide holes 122AH3, 122BH3, respectively, so that the lifting band 130' can be easily aligned and coupled to each of the battery cell assemblies 120. Accordingly, the efficiency and accuracy of the assembly process of the battery pack 100 can be improved.

### (Third Embodiment)

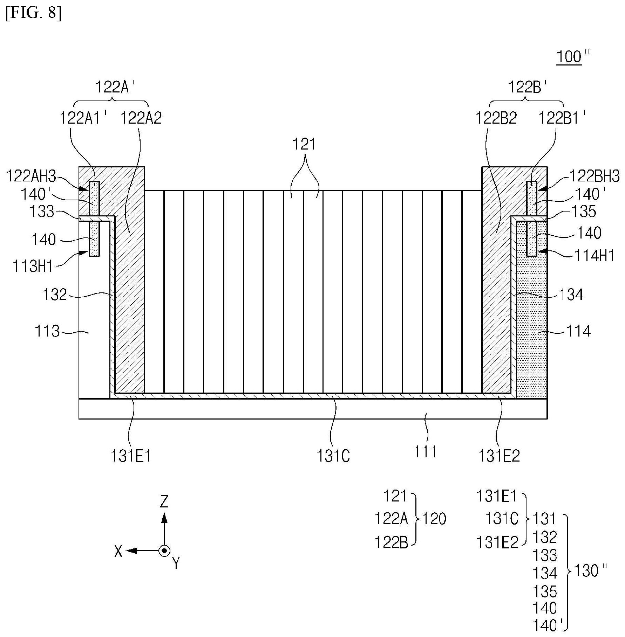

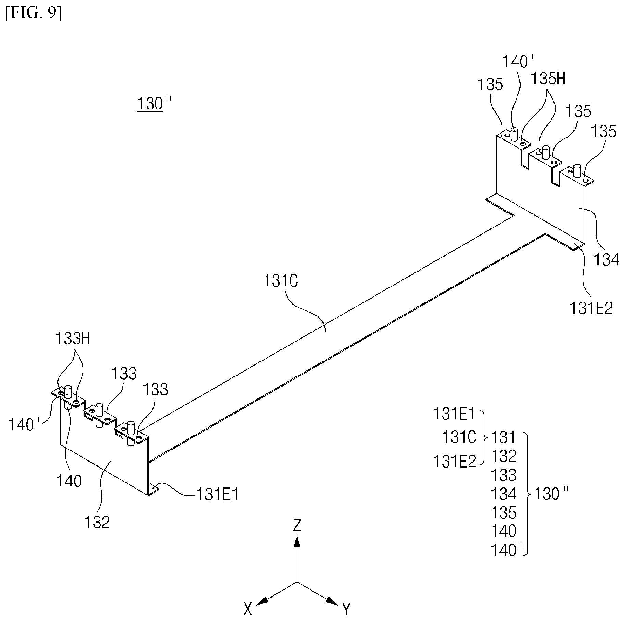

FIGS. 8 and 9 are diagrams for explaining a battery pack 100" according to other exemplary embodiments.

FIG. 8 is a cross-sectional view illustrating a battery pack 100" according to exemplary embodiments. FIG. 8 illustrates a cross-section taken along line A-A' of FIG. 1.

FIG. 9 is a perspective view illustrating a lifting band 130" according to exemplary embodiments.

In FIGS. 8 and 9, components having the same reference numerals as in FIGS. 1 to 7 may have the descriptions described above in the first and second embodiments applied thereto, and the same descriptions will be omitted. Hereinafter, the description will focus on the configurations of the third embodiment that are different from the first and second embodiments.

The battery pack 100" differs from the battery pack of the first embodiment (100 of FIGS. 1 to 5) and the battery pack of the second embodiment (100' of FIGS. 6 and 7) in that the lifting band 130" includes both guide pins 140 and 140'. That is, the lifting band 130" of the battery pack 100" includes both the guide pins 140 of the first embodiment and the guide pins 140' of the second embodiment.

The lifting band 130" may include guide pins 140 and 140' on the third portion 133 and guide pins 140, 140' on the fifth portion 135. The guide pins 140 on the third portion 133 may face the cross beam 113. The guide pins 140' on the third portion 133 may face the coupling part 122A1' of the side beam 122A'. The guide pins 140 may be on one surface of the third portion 133, and the guide pins 140' may be on the other surface of the third portion 133.

The guide pins 140 on the fifth portion 135 may face the side wall 114. The guide pins 140' on the fifth portion 135 may face the coupling part 122B1' of the side beam 122B'. The guide pins 140 may be on one surface of the fifth portion 135, and the guide pins 140' may be on the other surface of the fifth portion 135.

The cross beam 113 may include guide holes 113H1. Each of the guide holes 113H1 may accommodate each of the guide pins 140 on the third portion 133. Each of the guide holes 113H1 may be formed at a position corresponding to each of the guide pins 140 on the third portion 133. Each of the guide holes 113H1 may have a shape complementary to each of the guide pins 140 on the third portion 133.

The coupling part 122A1' of the side beam 122A' may include guide holes 122AH3. Each of the guide holes 122AH3 may accommodate each of the guide pins 140' on the third portion 133. Each of the guide holes 122AH3 may be formed at a position corresponding to each of the guide pins 140' on the third portion 133. Each of the guide holes 122AH3 may have a shape complementary to each of the guide pins 140' on the third portion 133.

The side wall 114 may include guide holes 114H1. Each of the guide holes 114H1 may accommodate each of the guide pins 140 on the fifth portion 135. Each of the guide holes 114H1 may be formed at a position corresponding to each of the guide pins 140 on the fifth portion 135. Each of the guide holes 114H1 may have a shape complementary to each of the guide pins 140 on the fifth portion 135.

The coupling part 122B1' of the side beam 122B' may include guide holes 122BH3. Each of the guide holes 122BH3 may accommodate each of the guide pins 140' on the fifth portion 135. Each of the guide holes 122BH3 may be formed at a position corresponding to each of the guide pins 140 on the fifth portion 135. Each of the guide holes 122BH3 may have a shape complementary to each of the guide pins 140' on the fifth portion 135.

In FIGS. 8 and 9, an embodiment in which each of the guide pins 140 and each of the guide pins 140' are aligned in the Z direction is illustrated, but the present disclosure is not limited thereto. According to other exemplary embodiments, each of the guide pins 140 may not be aligned with each of the guide pins 140' in the Z direction.

The battery pack 100" according to the exemplary embodiments of the present disclosure includes the lifting band 130 including the guide pins 140 and the pack housing 110 including the guide holes 113H1, 114H1, so that the lifting band 130" can be easily and precisely seated on the pack housing 110. In addition, the battery pack 100" includes the lifting band 130" including the guide pins 140' and the side beams 122A', 122B' including the guide holes 122AH3, 122BH3, respectively, so that the lifting band 130" can be easily coupled to each of the battery cell assemblies 120. Accordingly, the efficiency and accuracy of the assembly process of the battery pack 100 can be improved.

Above, the present disclosure has been described in more detail through the drawings and embodiments. However, the configurations described in the drawings or embodiments described in the present specification are merely one embodiment of the present disclosure and do not represent all of the technical idea of the present disclosure. It should be understood that various equivalents and modifications that can replace them may exist at the time of filing this application.

## Claims

1. A battery pack comprising:
a pack housing comprising a base plate, a cross beam extending on the base plate, and a side wall on an edge of the base plate;
a battery cell assembly comprising battery cells arranged in a first direction on the base plate, and first and second side beams spaced apart from each other in the first direction with the battery cells interposed therebetween; and
a lift band between the battery cell assembly and the pack housing, wherein
the lift band comprises:
a first portion between the base plate and the battery cells;
a second portion connected to the first portion and overlapping the first side beam in the first direction; and
a third portion connected to the second portion and overlapping the first side beam in a vertical direction perpendicular to a mounting surface of the base plate.

2. The battery pack of claim 1, further comprising:
a fourth portion connected to the first portion and overlapping the second side beam in the first direction; and
a fifth portion connected to the fourth portion and overlapping the second side beam in the vertical direction.

3. The battery pack of claim 1, wherein
the lift band comprises a first guide pin on the third portion.

4. The battery pack of claim 3, wherein
the first guide pin faces the cross beam.

5. The battery pack of claim 4, wherein
the cross beam comprises a guide hole corresponding to the first guide pin.

6. The battery pack of claim 3, wherein
the first guide pin faces the first side beam.

7. The battery pack of claim 6, wherein
the first side beam comprises a guide hole corresponding to the first guide pin.

8. The battery pack of claim 3, wherein
the lift band further comprises a second guide pin on the third portion,
the first guide pin faces the cross beam, and
the second guide pin faces the first side beam.

9. The battery pack of claim 8, wherein
the cross beam comprises a guide hole corresponding to the first guide pin, and
the first side beam comprises a guide hole corresponding to the second guide pin.

10. The battery pack of claim 1, wherein
the third portion comprises a bolting hole, and
the first side beam comprises a bolting hole.

11. The battery pack of claim 10, further comprising
a fastener passing through the bolting hole of the third portion and the bolting hole of the first side beam.

12. The battery pack of claim 1, wherein
the lift band comprises a third guide pin on a fifth portion.

13. The battery pack of claim 12, wherein
the third guide pin faces the side wall, and
the side wall comprises a guide hole corresponding to the third guide pin.

14. The battery pack of claim 12, wherein
the third guide pin faces the second side beam, and
the second side beam comprises a guide hole corresponding to the third guide pin.

15. The battery pack of claim 12, wherein
the lift band further comprises a fourth guide pin on the fifth portion,
the third guide pin faces the side wall,
the fourth guide pin faces the second side beam,
the side wall comprises a guide hole corresponding to the third guide pin, and
the second side beam comprises a guide hole corresponding to the fourth guide pin.
